# EUROPEAN PATENT SPECIFICATION

(11) **EP 1 924 086 B1**
(45) Date of publication and mention of the grant of the patent: **18.01.2012**
(21) Application number: 07022321.9
(22) Date of filing: 16.11.2007
(51) Int. Cl.: H04N 5/44

(54) **Method and system for upgrading distributed set top box and device thereof**
Verfahren und System zur Aufrüstung eines verteilten Digitalempfängers und Vorrichtung dafür
Procédé et système de modernisation d'un boîtier décodeur distribué et dispositif associé

(30) Priority: 17.11.2006 CN 200610138485
(43) Date of publication of application: 21.05.2008
(73) Proprietor: Huawei Technologies Co., Ltd., Longgang District, Shenzhen Guangdong 518129 (CN)
(72) Inventor: Yang, Tao, Shenzhen 518129, Guangdong P.R. (CN)
(74) Representative: Reinhard - Skuhra - Weise & Partner GbR

(56) References cited:
- WO-A-2007/039576
- US-A1- 2007 121 612

## Description

### Field of the Invention

The present invention relates to Internet Protocol Television (IPTV) technology, and more particularly, to a method and system for upgrading distributed Set Top Box (STB), devices thereof, and computer program products.

### Background of the Invention

At present, the large-scale software upgrade of devices such as STB is a problem for a lot of user terminals. Because during the software upgrade, the action of a user is uncontrollable, a lot of STBs often request the software upgrade simultaneously, which occupies too much master network bandwidth and has a great impact on the services and the IPTV system. Therefore, it is necessary to provide a solution to solve the above mentioned problem.

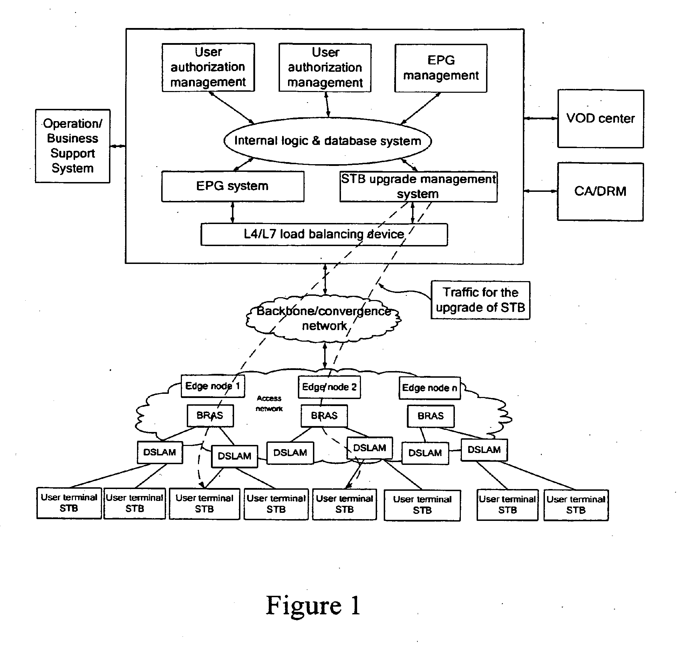

Figure 1 is a schematic diagram illustrating a typical deployment of the function modules and system in an IPTV application architecture. Referring to Figure 1, the system for managing the upgrade of the STB has a centralized deployment in the IPTV application architecture, i.e. the whole STB upgrade management system is deployed at a central node of network. The reliability and load balance of the system are implemented by deploying an L4/L7 load balancing device at a front end. The abovementioned deployment method is applicable to small areas when the user terminals are of a small scale, but has the following disadvantages when it's applied to large areas and distributed areas.

Referring to Figure 1, because the STB upgrade management system is deployed at the centre of the network as shown by the dashed line, all STB upgrade traffics pass through the backbone/convergence network during the software upgrade of the STB, which increases the load pressure for the backbone/convergence network. In addition, the STB upgrade management system is unable to provide a convenient service according to the user location, which may lead to delay in response and may increase the upgrade unreliability. At last, all of the STB upgrade management system is deployed at the central node, which blocks the whole system to implement high availability; and the L4/L7 load balancing device of the front end will be a bottleneck of performance, it is not adapt to the situation of large-scale users.

### Summary of the Invention

A method for upgrading a distributed STB from a central node upgrade management device is provided by the present invention. The method includes the following steps:
receiving an STB upgrade request sent by a user terminal;
selecting a device upgrade address of an edge node; and
sending the device upgrade address of the edge node to the user terminal.

A method to upgrade a user terminal with new STB upgrade information is also provided by the present invention. In the method, an STB upgrade request is sent by the user terminal to a central upgrade management device, and the user terminal receives a device upgrade address to an edge node from the central upgrade management system, sends the STB upgrade request to the device upgrade address, and receives the STB upgrade information from the edge node.

A central node upgrade management device is further provided by the present invention. The central node upgrade management device includes: a first unit, configured to receive an STB upgrade request from a user terminal;
a second unit, configured to select a device upgrade address of an edge node; and
a third unit, configured to send the device upgrade address of the edge node to the user terminal.

An edge node in a system for upgrading a distributed STB is also provided by the present invention. The edge node is configured to receive a STB update request from a user terminal to a device upgrade address of the edge node, and to send the STB user information to the user terminal.

A user terminal with an STB, configured to send a request for STB upgrade information to a central upgrade management system, is also provided by the present invention. The user terminal is configured to receive a device upgrade address to an edge node from the central upgrade management system, send the STB upgrade request to the device upgrade address, and receive the STB upgrade information from the edge node.

A system for upgrading distributed STB includes: a central node upgrade management device as mentioned above and at least one edge node as mentioned above.

A computer program product is also provided by the present invention. The computer program product includes computer program code, which, when executed by a computer unit, will cause the computer unit to perform the steps of the user terminal mentioned above.

A computer readable medium is also provided by the present invention. The computer readable medium stores the computer program code mentioned in the computer program product.

The present invention has the following advantages.

The distributed STB upgrade management system is deployed at each edge node close to a user terminal, and the traffic produced by the STB upgrade does not need to pass through the backbone/convergence network. So the pressure of the upgrade of the STB on the backbone/convergence network is reduced, and the response speed and reliability of the upgrade of the STB is greatly improved.

### Brief Description of the Drawings

Figure 1 is a schematic diagram illustrating the centralized deployment of STB upgrade management system in the IPTV application architecture of the prior art.
Figure 2 is a schematic diagram illustrating a structure of distributed STB upgrade management system in accordance with a first embodiment of the present invention.
Figure 3 is a schematic diagram illustrating a structure of distributed STB upgrade management system in accordance with a second embodiment of the present invention.
Figure 4 is a flowchart illustrating a distributed STB upgrade management method in accordance with a third embodiment of the present invention.
Figure 5 is a schematic diagram illustrating a distributed STB upgrade management method in accordance with a forth embodiment of the present invention.
Figure 6 is a flowchart illustrating a distributed STB upgrade management method in accordance with the forth embodiment of the present invention.
Figure 7 is a schematic diagram illustrating a distributed STB upgrade management method in accordance with a fifth embodiment of the present invention.
Figure 8 is a flowchart illustrating a distributed STB upgrade management method in accordance with the fifth embodiment of the present invention.

### Detailed Description of the Invention

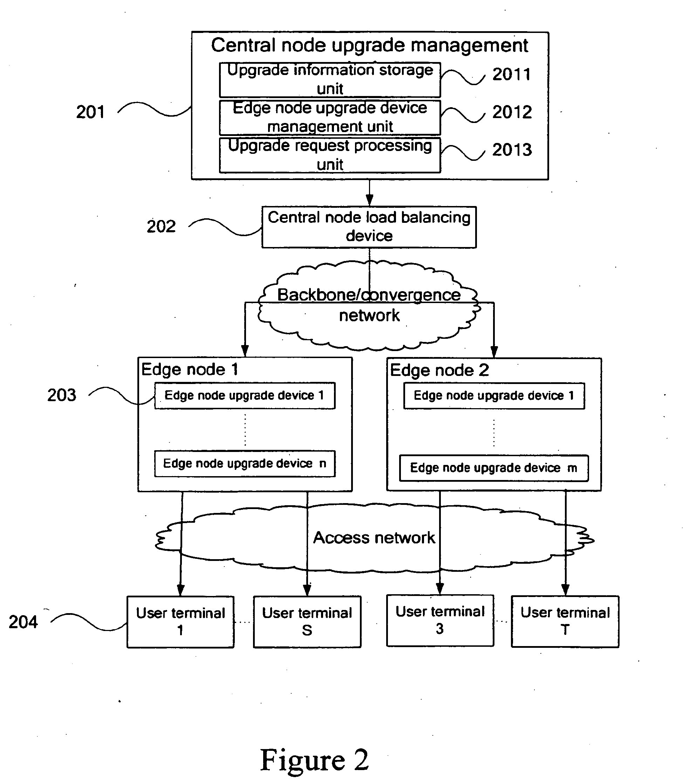

In accordance with an embodiment of the present invention, the distributed STB upgrade management system may deploy one or multiple edge nodes in a network according to the distribution of user terminals, and deploy one or multiple upgrade devices at each edge node. The number of edge nodes and upgrade devices may be adjusted according to the number of user terminals. If two edge nodes are deployed in the distributed STB upgrade management system, and multiple edge node upgrade devices are respectively deployed under the two edge nodes, a first embodiment of the present invention is hereinafter described. As shown in Figure 2, the distributed STB upgrade management system consists of a central node upgrade management device 201, a central node load balancing device 202, multiple edge node upgrade devices 203 under each edge node, and multiple user terminals 204.

The central node upgrade management device 201 resides in the central node of the network; the central node load balancing device 202 resides in the front end of the central node upgrade management device 201; a central Virtual IP (c-VIP) address is externally used by the central node upgrade management device 201. Each of the edge nodes is connected to a central node over a backbone/convergence network, and each of the edge nodes has multiple edge node upgrade devices 203. Each edge node has multiple user terminals 204 connected to the edge node via the access network.

The central node upgrade management device 201 is used for storing STB upgrade information, maintaining the device upgrade address and STB software information of each edge node upgrade device 203, selecting and sending the address of an optimized edge node upgrade management device as the device upgrade address to a user terminal 204, after receiving an STB upgrade request from the user terminal 204.

Referring to Figure 2, the central node upgrade management device 201 further includes an upgrade information storage unit 2011, an edge node upgrade device management unit 2012 and an upgrade request processing unit 2013.

The upgrade information storage unit 2011 stores the newest STB software information.

The edge node upgrade device management unit 2012 manages the address of each edge node upgrade device, and updates the STB software information stored by each edge node upgrade device 203.

Upon receiving an STB upgrade request from the user terminal 204 according to the location information of the user terminal 204, the load condition and/or the operation condition of each edge node upgrade device provided by the central node load balancing device 202, the upgrade request processing unit 2013 selects and sends the address of an optimized edge node upgrade device to the user terminal 204. The standard for selecting an optimized edge node upgrade device includes: normal operation and the least load, or other preset strategies.

The central node load balancing device 202 manages the signalling interaction between the central node upgrade management device 201 and the external network, and obtains the load condition and/or the operation condition of each edge node upgrade device 203 periodically. The operation condition includes the network response time, CPU utilization factor, memory utilization factor, whether each of the hardware works well, whether each of the software works well, and whether the upgrade information is correct, etc.

The edge node upgrade device 203 resides at the edge of the network, and the edge node upgrade device 203 provides an adjacent user terminal with the information required for upgrade upon receiving an STB upgrade request from a user terminal.

The user terminal 204 includes an STB device, sends an upgrade request to the central node upgrade management device 201 during the upgrade of the STB, and receives the upgrade information sent by the edge node upgrade device 203.

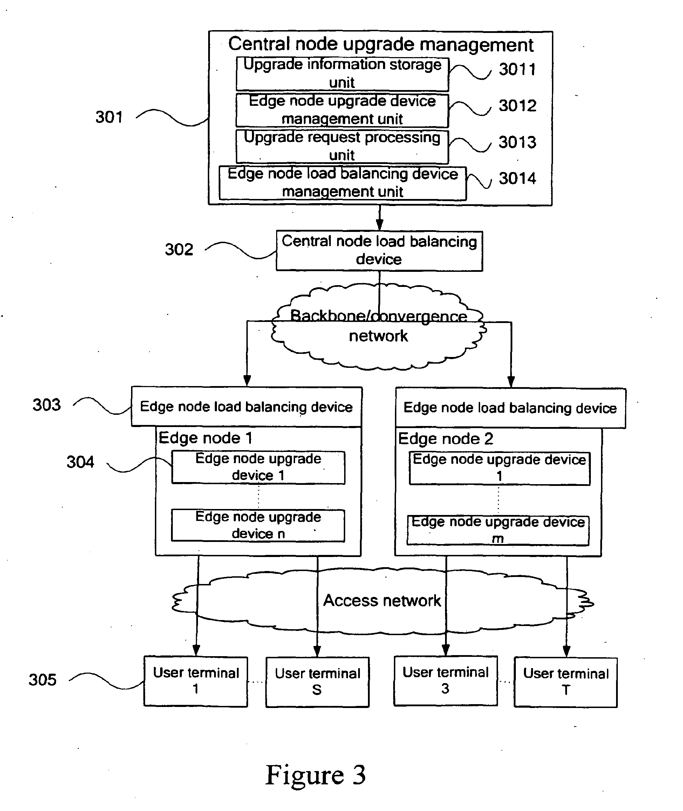

The system for upgrading distributed STBs in accordance with an embodiment of the present invention may also deploy one or multiple edge nodes in the network according to the distribution of user terminals, deploy one edge node load balancing device, and deploy one or multiple upgrade devices at each edge node; the number of edge nodes and the number of the upgrade devices may be adjusted according to the number of user terminals. A second embodiment of the present invention is hereinafter described, and in the second embodiment two edge nodes are deployed in the distributed STB upgrade management system; and one edge node load balancing device and multiple edge node upgrade devices are deployed under each of the two edge nodes. As shown in Figure 3, the distributed STB upgrade management system includes a central node upgrade management device 301, a central node load balancing device 302, an edge node load balancing device 303 of each edge node, multiple edge node upgrade devices 304 and multiple user terminals 305.

In Figure 3, the central node upgrade management device 301 resides in the central management node of the network, and the central node load balancing device 302 resides in the front end of the central node upgrade management device 301; a central Virtual IP (c-VIP) address is externally used by the central node upgrade management device 301. Each of the edge nodes is connected to the central node over the backbone/convergence network. Each of the edge nodes has one edge node load balancing device 303 using an edge Virtual IP (e-VIP) address, and multiple edge node upgrade devices 304. Each of the edge nodes has multiple user terminals 305 connected to the edge node over the access network.

The central node upgrade management device 301 stores the STB upgrade information, and maintains the address and STB software information of each edge node upgrade device 304 and the address of each edge node load balancing device 303; and sends the e-VIP address of the load balancing device 303 of the edge node adjacent to the user terminal to the user terminal 305 upon receiving an STB upgrade request from the user terminal 305.

Referring to Figure 3, the central node upgrade management device 301 further includes an upgrade information storage unit 3011, an edge node upgrade device management unit 3012, an upgrade request processing unit 3013 and an edge node load balancing device management unit 3014.

The upgrade information storage unit 3011 stores the newest STB software information.

The edge node upgrade device management unit 3012 manages the device upgrade address of each edge node upgrade device 304, and updates the STB software information stored by each edge node upgrade device 304 periodically.

The upgrade request processing unit 3013 sends the e-VIP address of the load balancing device 303 of the edge node adjacent to the user terminal to the user terminal 305 according to the location information of the user terminal 305, after receiving an STB upgrade request from the user terminal 305;

The edge node load balancing device management unit 3014 manages the e-VIP address of the edge node load balancing device 303 under each edge node.

The central node load balancing device 302 manages the signalling interaction between the central node upgrade management device 201 and the external network.

The edge node load balancing device 303 manages the device upgrade address of each edge node upgrade device 304 under the same edge node, and obtains the load condition and the operation condition of each edge node upgrade device 304 periodically. The operation condition includes the network response time, CPU utilization factor, memory utilization factor, whether each of the hardware works well, whether each of the software works well, and whether the upgrade information is correct, etc. The edge node load balancing device 303 selects an optimized edge node upgrade device to upgrade the STB of the user terminal 305 after receiving an STB upgrade request sent by the user terminal 305. The standard for selecting an optimized edge node upgrade device includes: normal operation and the least load, or other preset strategies.

The edge node upgrade device 304 resides at the edge of the network, and provides a user terminal with the information required for upgrade.

A user terminal 305 including an STB device sends an upgrade request to the central node upgrade management device 301 during the upgrade of the STB, and receives the upgrade information sent by the edge node upgrade device 304.

The distributed STB upgrade management system, as shown in the first embodiment or the second embodiment, deploys an upgrade server at different edge nodes. For the STB upgrade requests sent by the user terminals residing in different locations, the central node upgrade management device or the edge node load balancing device selects the address of the different edge node upgrade devices as the device upgrade address, so that the traffic for the upgrade of the STB is obtained from the edge node upgrade device directly, and the pressure for the backbone/convergence network is greatly reduced. Further, the number of edge nodes and upgrade devices may be adjusted according to the number of user terminals, which improves the response speed and reliability of the upgrade of the STBs, and meets the requirement of application with large-scale users.

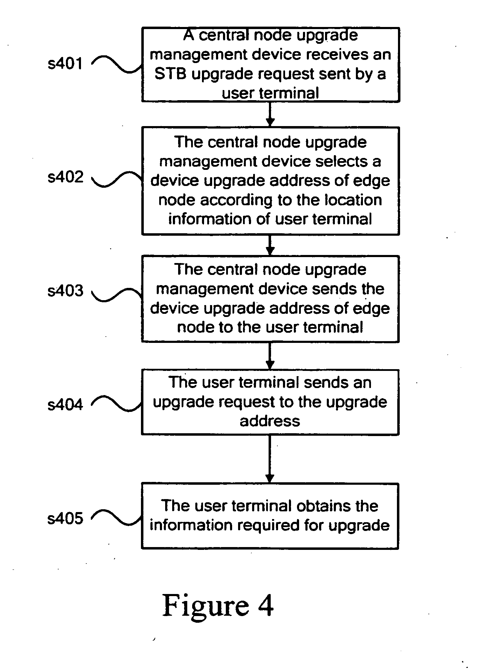

Figure 4 is a flowchart illustrating a distributed STB upgrade management method in accordance with a third embodiment of the present invention. The third embodiment includes the following steps:
s401: A central node upgrade management device receives an STB upgrade request sent by a user terminal.
s402: The central node upgrade management device selects a device upgrade address of an edge node according to the location information of the user terminal.
s403: The central node upgrade management device returns the device upgrade address of the edge node to the user terminal.
s404: The user terminal sends an upgrade request to the device upgrade address.
s405: The user terminal obtains the information required for the upgrade.

In s402, there are two methods for the central node to select a device upgrade address of an edge node.

The first method: the central node upgrade management device obtains the load condition and/or the operation condition of each current edge node upgrade device by exchanging information with each edge node upgrade device periodically, selects the device upgrade address of an optimized edge node upgrade device as the device upgrade address of the edge node, and notifies the user terminal to communicate with the device upgrade address of the edge node. The distributed group of edge node upgrade management devices provides the high availability and load balancing. The standard for selecting an optimized edge node upgrade device includes: being close to the user terminal, normal operation with the least load, or other preset strategies.

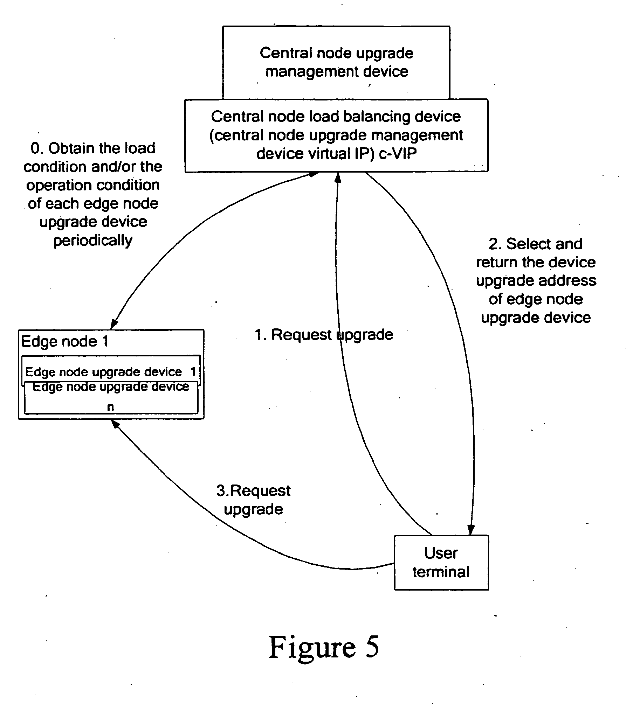

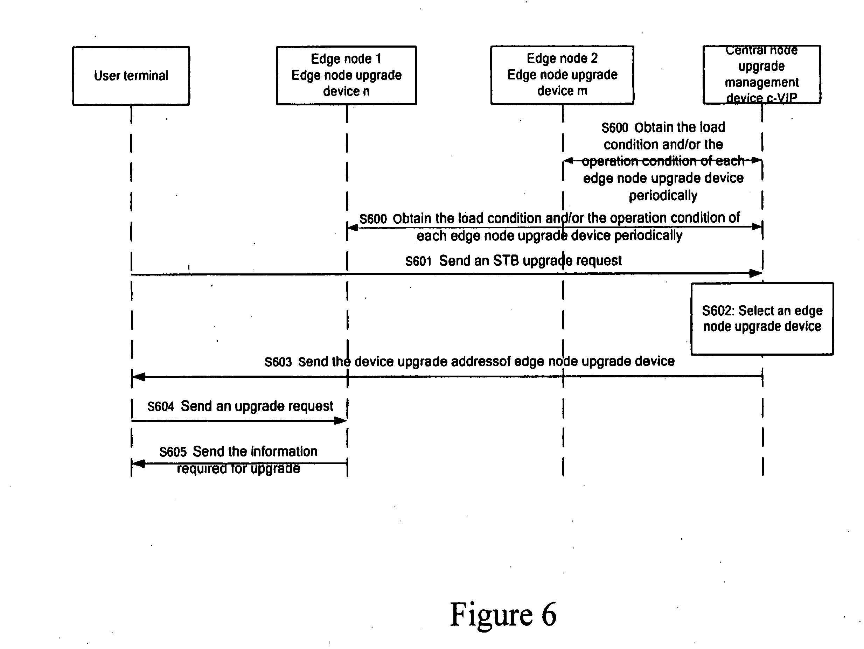

The principle of the above first method is shown in Figure 5. In a fourth embodiment of the present invention, the central node upgrade management device obtains the load condition and/or the operation condition of each current edge node by exchanging information with each edge node upgrade device periodically. After receiving an STB upgrade request from the user terminal, the central node upgrade management device returns the device upgrade address of an optimized edge node upgrade device as the device upgrade address of the edge node, which is done according to the location of the user terminal, the load condition and/or the operation condition of each current edge node, or preset other strategies. The user terminal upgrades the STB software from the optimized edge node upgrade device according to the device upgrade address received. Referring to the Figure 6, the signalling flow of the above distributed STB upgrade method includes the following Steps.

s600: A central node upgrade management device performs the signalling interaction with the external network over the load balancing device using one c-VIP address; the central node upgrade management device obtains the load condition and/or the operation condition of each edge node upgrade device from each edge node upgrade device periodically.

s601: The user terminal sends an STB upgrade request to the central node upgrade management device according to the c-VIP address.

s602: The central node upgrade management device determines the location of user terminal as edge node 1. The central node upgrade management device selects an edge node upgrade device whose operation is normal and whose load is the least, according to the load condition and/or the operation condition of n upgrade devices under the edge node 1; or selects a corresponding edge node upgrade device according to the preset other strategies.

s603: The central node upgrade management device sends the address of edge node upgrade device to the user terminal.

s604: The user terminal sends an STB upgrade request to the address of the edge node upgrade device, and records the address as the device upgrade address of the STB. Hereafter the user terminal may send an upgrade request to the address directly instead of sending a request to the central node upgrade management device as long as the user terminal is not rebooted.

s605: An edge node upgrade device sends the information required for the upgrade of the STB to the user terminal; and the user terminal receives the information sent by the edge node upgrade device.

In s601~s605, if there is a malfunction occurring to the edge node upgrade device which provides the user terminal with the STB upgrade information, the STB reboots the procedure from Step s601 automatically to obtain a new address of the edge node upgrade device.

The second method: a load balancing device is deployed at the front end of each edge node upgrade device group, and the central node upgrade management device notifies the user terminal of taking the address of the load balancing device of the edge node adjacent to the user terminal as the device upgrade address, so the load balancing device implements the load balance and high availability of the distributed edge node upgrade management device group.

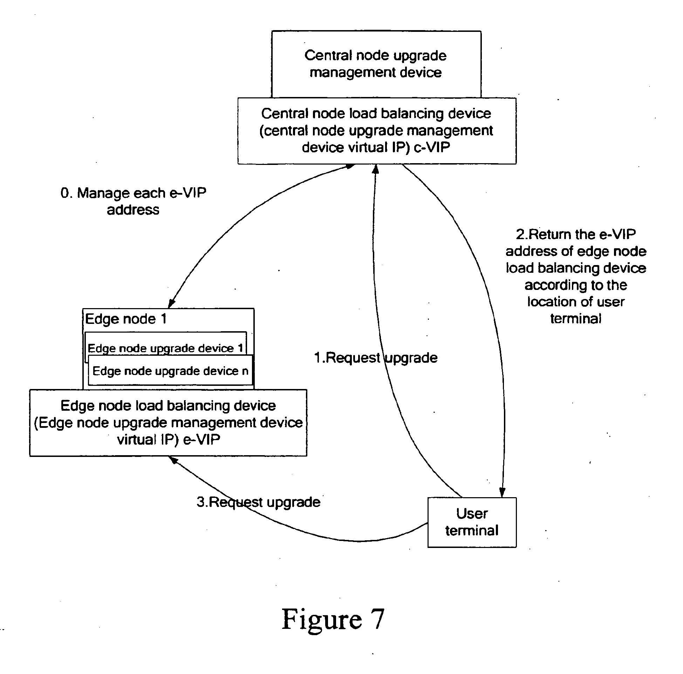

In a fifth embodiment of the present invention, the principle of the abovementioned second method is shown in Figure 7. Compared with the Method (1), the Method (2) deploys a load balancing device at the front end of each edge node upgrade device group. The central node upgrade management device directly maintains the location of each user terminal and the e-VIP address of the load balancing device corresponding to the edge node adjacent to the user terminal, and manages the load balancing device of each edge node. The load balancing device of each edge node obtains the load condition and/or the operation condition of each edge node upgrade device, and allocates the traffic of the edge node for the upgrade of the STB. After receiving an STB upgrade request of a user terminal, the central node upgrade management device returns the e-VIP address of the load balancing device of the edge node adjacent to the user terminal to the user terminal; the user terminal sends an STB upgrade request to the e-VIP address of the load balancing device designated, and records the e-VIP address as the device upgrade address of the STB; the edge node load balancing device notifies the edge node upgrade device of sending the STB upgrade information to the user terminal; the edge node upgrade device sends the information required for the upgrade of the STB to the user terminal; the user terminal receives the information.

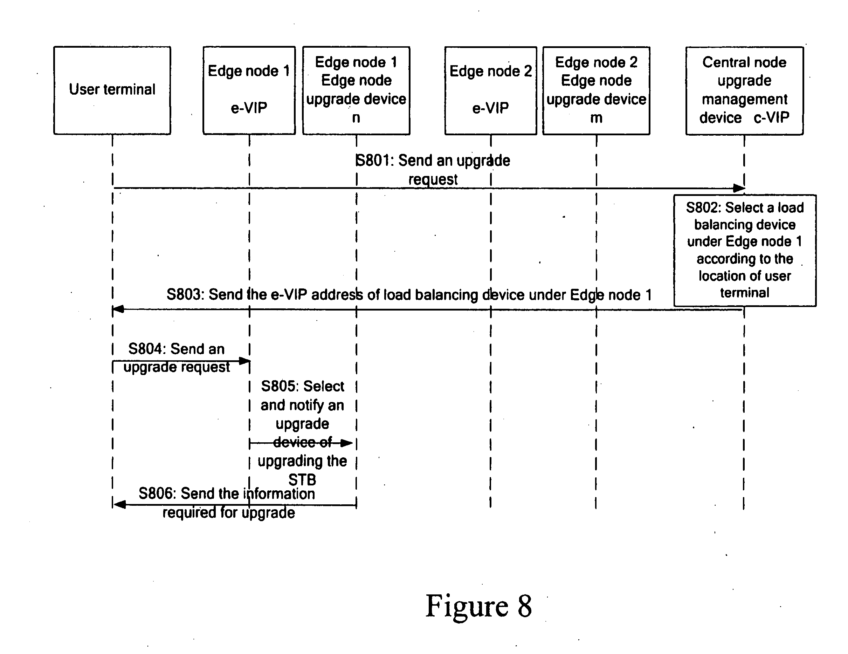

Referring to Figure 8, the signalling flow of the above distributed STB upgrade method includes:

The central node upgrade management device performs the signalling interaction with the external network over the central node load balancing device using one e-VIP address; an edge node load balancing device is deployed at the front end of each edge node upgrade device group and has an e-VIP address; the central node upgrade management device manages each edge node load balancing device which obtains the load condition and/or the operation condition of each edge node upgrade device periodically.

s801: The user terminal sends an STB upgrade request to the central node upgrade management device.

s802: The central node upgrade management device selects an edge node load balancing device which is under the edge node 1 according to the location of the user terminal, in this embodiment the user terminal is supposed to reside in edge node 1.

s803: The central node upgrade management device sends the e-VIP address of the load balancing device of edge node 1 to the user terminal.

s804: The user terminal sends an STB upgrade request to the e-VIP address of the load balancing device designated, and records the e-VIP address as the device upgrade address of the STB; hereafter, the user terminal may send an upgrade request to the address directly, instead of sending a request to the central node upgrade management device as long as the user terminal is not rebooted.

s805: The edge node load balancing device selects an edge node upgrade device according to the load condition and/or the operation condition of each upgrade device under the edge node, wherein the selection is made according to that the operation of the edge node upgrade device is normal and the load of the edge node upgrade device is least; or selects a corresponding edge node upgrade device according to a preset strategy. Then the edge node load balancing device notifies the edge node upgrade device of sending the STB upgrade information to the user terminal.

s806: The edge node upgrade device sends the information required for the upgrade of the STB to the user terminal; the user terminal receives the information.

In s801~s806, if there is a malfunction occurring to the edge node load balancing device which provides the user terminal with the STB upgrade information, the STB reboots the procedure from Step s801 automatically to obtain the e-VIP address of a new edge node load balancing device.

In accordance with the methods provided by the fourth embodiment and the fifth embodiment, the central node upgrade management device or the edge node load balancing device selects different edge node upgrade devices as the device upgrade address according to the location of user terminal, the load condition and/or the operation condition of the edge node upgrade device, to obtain the traffic for the upgrade of the STB from the edge node upgrade device directly. According to the fourth embodiment and the fifth embodiment, the pressure to the backbone/convergence network due to the traffic for the upgrade of the STB is greatly reduced, and the response speed and reliability of the upgrade of the STB is improved.

In a sixth embodiment of the present invention, a central node upgrade management device is described. The central node upgrade management device includes a first unit which is configured for receiving an STB upgrade request from a user terminal; a second unit which is configured for selecting a device upgrade address of an edge node; and a third unit which is configured for sending out the device upgrade address of edge node to the user terminal.

The second unit may be configured for selecting the device upgrade address of an edge node upgrade device according to at least one of the location information of the user terminal, the load condition, and the operation condition of each edge node upgrade device deployed in the edge node.

The foregoing are only several embodiments of the present invention. Any change or substitution, within the technical scope disclosed by the present invention, easily occurring to those skilled in the art should be covered by the protection scope of the present invention.

## Claims

1. A method for upgrading a distributed Set Top Box (STB) from a central node upgrade management device, **characterised by** comprising the steps of:
receiving (s401) an STB upgrade request sent by a user terminal;
selecting (s402) a device upgrade address of an edge node; and
sending (s403) the device upgrade address of the edge node to the user terminal.

2. The method of Claim 1, **characterised in that** the user terminal obtains upgrade information from the edge node through the device upgrade address (s604, s605).

3. The method of Claim 1 or 2, **characterised by** obtaining (s600) at least one of a load condition and an operation condition of each edge node upgrade device deployed in the edge node, before receiving the STB upgrade request.

4. The method of Claim 3, **characterised in that** the selection of a device upgrade address of an edge node comprises:
selecting (s602) the device upgrade address according to at least one of location information of the user terminal, the load condition, and the operation condition of each edge node upgrade device deployed in the edge node.

5. The method of any one preceding Claim, **characterised in that** the device upgrade address of the edge node comprises a device upgrade address of an edge node upgrade device deployed in the edge node (s402).

6. The method of Claim 5, **characterised in that** the user terminal obtains upgrade information from the edge node upgrade device through the device upgrade address (s402).

7. The method of Claim 1 or 2, **characterised in that** the device upgrade address of the edge node comprises a device upgrade address of an edge node load balancing device deployed in the edge node (s802).

8. The method of Claim 7, **characterised by**
receiving (s804), by the edge node load balancing device, the STB upgrade request sent by the user terminal;
selecting (s805), by the edge node load balancing device, an edge node upgrade device of the edge node upgrade devices deployed in the edge node;
notifying (s805), by the edge node load balancing device, the selected edge node upgrade device of sending the STB upgrade information to the user terminal.

9. The method of claim 8, **characterised in that** the user terminal obtains the upgrade information from the selected edge node upgrade device (s806).

10. The method of Claim 8, **characterised by** obtaining (s805), by the edge node load balancing device, at least one of a load condition and an operation condition of each edge node upgrade device deployed in the edge node, before receiving the STB upgrade request.

11. A method of upgrading a user terminal with new Set Top Box (STB) upgrade information, where an STB upgrade request is sent, by the user terminal, to a central upgrade management device, **characterised by**
receiving (s603, s803), by the user terminal, a device upgrade address to an edge node from the central upgrade management system;
sending (s604, s804, s805), by the user terminal, the STB upgrade request to the device upgrade address; and
receiving (s806), by the user terminal, the STB upgrade information from the edge node.

12. A central node upgrade management device (201, 301), comprising a first unit (2013, 3013), configured to receive a Set Top Box (STB) upgrade request from a user terminal (204, 305), **characterised in that** it further comprises: terminal (204, 305), **characterised in**
a second unit (2013, 3013), configured to select a device upgrade address of an edge node; and
a third unit (2013, 3013), configured to send the device upgrade address of the edge node to the user terminal.

13. The central node upgrade management device of Claim 12, **characterised in that** the second unit (2013, 3013) is configured to select the device upgrade address of an edge node upgrade device (203, 304) according to at least one of location information of the user terminal (204, 305), the load condition, and the operation condition of each edge node upgrade device (203, 304) deployed in the edge node:

14. An edge node in a system for upgrading a distributed Set Top Box (STB) **characterised in that** the edge node is configured to receive a STB update request from a user terminal (204, 305) to a device upgrade address of the edge node, and to send the STB user information to the user terminal (204, 305).

15. The edge node of Claim 14, **characterised in that** the edge node comprises at least one edge node upgrade device (203, 304) which is configured to send information stored for upgrading the STB to the user terminal (204, 305) upon receiving the upgrade request sent by the user terminal (204, 305) according to the device upgrade address of the edge node.

16. The edge node of claim 15, **characterised in that** the edge node comprises an edge node load balancing device (303) which is configured to obtain at least one of the load condition and the operation condition of each edge node upgrade device (304), to select the device upgrade address of one edge node upgrade device (304) deployed in the edge node according to at least one of the load condition and the operation condition of the each edge node upgrade device (304), and to notify the selected edge node upgrade device (304) to send the STB upgrade information to the user terminal (305).

17. A user terminal (204, 305) with a Set Top Box (STB) configured to send a request for STB upgrade information to a central upgrade management system, **characterised in that** the user terminal (204, 305) is configured
to receive a device upgrade address to an edge node from the central upgrade management system;
to send the STB upgrade request to the device upgrade address; and
to receive the STB upgrade information from the edge node.

18. A system for upgrading distributed Set Top Box (STB) **characterised by** comprising: a central node upgrade management device (201, 301) as claimed in Claim 12 and at least one edge node as claimed in Claim 14.

19. The system of Claim 18, **characterised in that** each edge node comprises at least one edge node upgrade device (203, 304) which is configured to send information stored for upgrading the STB to the user terminal upon receiving the upgrade request sent by the user terminal according to the device upgrade address of the edge node.

20. The system of Claim 19, **characterised in that** the central node upgrade management device (201, 301) further comprises a central node load balancing device (202, 302) which is configured to manage a signalling interaction between the central node upgrade management device (201, 301) and an external network, and obtain at least one of the load condition and the operation condition of each edge node upgrade device (203, 304), and that the central node upgrade management device (201, 301) is configured to select the device upgrade address of one edge node upgrade device (203, 304) deployed in the edge node according to at least one of the load condition and the operation condition of the each edge node upgrade device (203, 304).

21. The system of Claim 19, **characterised in that** each edge node further comprises an edge node load balancing device (303) which is configured to obtain at least one of the load condition and the operation condition of each edge node upgrade device (304), to select the device upgrade address of one edge node upgrade device (304) deployed in the edge node according to at least one of the load condition and the operation condition of the each edge node upgrade device (304), and to notify the selected edge node upgrade device (304) to send the STB upgrade information to the user terminal (305).

22. The system of Claim 21, **characterised in that** the central node upgrade management device (301) is configured to select the device upgrade address of the edge node load balancing device (303) as the device upgrade address of the edge node, and send the device upgrade address of the edge node load balancing device (303) to the user terminal (305) upon receiving an STB upgrade request sent by the user terminal (305).

23. A computer program product, **characterised in** comprising computer program code, which, when executed by a computer unit, will cause the computer unit to perform the steps of a user terminal according to any one of Claims 2, 6, 9 and 11.

24. A computer readable medium, **characterised in that** computer program code according to Claim 23 is stored on the computer readable medium.

## Patentansprüche

1. Verfahren zum Aufrüsten einer verteilten Set-Top-Box (STB) von einer Zentralknoten-Aufrüstmanagementvorrichtung, **dadurch gekennzeichnet, dass** es die folgenden Schritte umfasst:
Empfangen (s401) einer durch ein Benutzerendgerät gesendeten STB-Aufrüstanforderung;
Auswählen (s402) einer Vorrichtungsaufrüstadresse eines Randknotens; und
Senden (s403) der Vorrichtungsaufrüstadresse des Randknotens an das Benutzerendgerät.

2. Verfahren nach Anspruch 1, **dadurch gekennzeichnet, dass** das Benutzerendgerät die Aufrüstinformationen durch die Vorrichtungsaufrüstadresse von dem Randknoten gewinnt (s604, s605).

3. Verfahren nach Anspruch 1 oder 2, **gekennzeichnet durch** das Gewinnen (s600) einer Lastbedingung und/oder einer Betriebsbedingung jeder Randknoten-Aufrüstvorrichtung, die in dem Randknoten eingesetzt wird, vor dem Empfangen der STB-Aufrüstanforderung.

4. Verfahren nach Anspruch 3, **dadurch gekennzeichnet, dass** die Auswahl einer Vorrichtungsaufrüstadresse eines Randknotens Folgendes umfasst:
Auswählen (s602) der Vorrichtungsaufrüstadresse in Übereinstimmung mit den Ortsinformationen des Benutzerendgeräts und/oder der Lastbedingung und/oder der Betriebsbedingung jeder Randknoten-Aufrüstvorrichtung, die in dem Randknoten eingesetzt wird.

5. Verfahren nach einem vorhergehenden Anspruch, **dadurch gekennzeichnet, dass** die Vorrichtungsaufrüstadresse des Randknotens eine Vorrichtungsaufrüstadresse einer Randknoten-Aufrüstvorrichtung, die in dem Randknoten eingesetzt wird, umfasst (s402).

6. Verfahren nach Anspruch 5, **dadurch gekennzeichnet, dass** das Benutzerendgerät Aufrüstinformationen durch die Vorrichtungsaufrüstadresse von der Randknoten-Aufrüstvorrichtung gewinnt (s402).

7. Verfahren nach Anspruch 1 oder 2, **dadurch gekennzeichnet, dass** die Vorrichtungsaufrüstadresse des Randknotens eine Vorrichtungsaufrüstadresse einer Randknoten-Lastausgleichsvorrichtung, die in dem Randknoten eingesetzt wird, umfasst (s802).

8. Verfahren nach Anspruch 7, **gekennzeichnet durch**
Empfangen (s804) **durch** die Randknoten-Lastausgleichsvorrichtung der **durch** das Benutzerendgerät gesendeten STB-Aufrüstanforderung;
Auswählen (s805) **durch** die Randknoten-Lastausgleichsvorrichtung einer Randknoten-Aufrüstvorrichtung der Randknoten-Aufrüstvorrichtungen, die in dem Randknoten eingesetzt werden;
Benachrichtigen (s805) **durch** die Randknoten-Lastausgleichsvorrichtung der ausgewählten Randknoten-Aufrüstvorrichtung vom Senden der STB-Aufrüstinformationen an das Benutzerendgerät.

9. Verfahren nach Anspruch 8, **dadurch gekennzeichnet, dass** das Benutzerendgerät die Aufrüstinformationen von der ausgewählten Randknoten-Aufrüstvorrichtung gewinnt (s806).

10. Verfahren nach Anspruch 8, **gekennzeichnet durch** das Gewinnen (s805) **durch** die Randknoten-Lastausgleichsvorrichtung einer Lastbedingung und/oder einer Betriebsbedingung jeder Randknoten-Aufrüstvorrichtung, die in dem Randknoten eingesetzt wird, vor dem Empfangen der STB-Aufrüstanforderung.

11. Verfahren zum Aufrüsten eines Benutzerendgeräts mit neuen Set-Top-Box-Aufrüstinformationen (STB-Aufrüstinformationen), wobei eine STB-Aufrüstanforderung durch das Benutzerendgerät an eine zentrale Aufrüstmanagementvorrichtung gesendet wird, **gekennzeichnet durch**
Empfangen (s603, s803) **durch** das Benutzerendgerät einer Vorrichtungsaufrüstadresse für einen Randknoten von dem zentralen Aufrüstmanagementsystem;
Senden (s604, s804, s805) **durch** das Benutzerendgerät der STB-Aufrüstanforderung an die Vorrichtungsaufrüstadresse und
Empfangen (s806) **durch** das Benutzerendgerät der STB-Aufrüstinformationen von dem Randknoten.

12. Zentralknoten-Aufrüstmanagementvorrichtung (201, 301), die eine erste Einheit (2013, 3013) umfasst, die konfiguriert ist, um eine Set-Top-Box-Aufrüstanforderung (STB-Aufrüstanforderung) von einem Benutzerendgerät (204, 305) zu empfangen, **dadurch gekennzeichnet, dass** sie ferner Folgendes umfasst:
eine zweite Einheit (2013, 3013), die konfiguriert ist, um eine Vorrichtungsaufrüstadresse eines Randknotens auszuwählen, und
eine dritte Einheit (2013, 3013), die konfiguriert ist, um die Vorrichtungsaufrüstadresse des Randknotens an das Benutzerendgerät zu senden.

13. Zentralknoten-Aufrüstmanagementvorrichtung nach Anspruch 12, **dadurch gekennzeichnet, dass** die zweite Einheit (2013, 3013) konfiguriert ist, um die Vorrichtungsaufrüstadresse einer Randknoten-Aufrüstvorrichtung (203, 304) in Übereinstimmung mit den Ortsinformationen des Benutzerendgeräts (204, 305) und/oder der Lastbedingung und/oder der Betriebsbedingung jeder Randknoten-Aufrüstvorrichtung (203, 304), die in dem Randknoten eingesetzt wird, auszuwählen.

14. Randknoten in einem System zum Aufrüsten einer verteilten Set-Top-Box (STB), **dadurch gekennzeichnet, dass** der Randknoten konfiguriert ist, um eine STB-Aufrüstanforderung von einem Benutzerendgerät (204, 305) für eine Vorrichtungsaufrüstadresse des Randknotens zu empfangen und die STB-Benutzerinformationen an das Benutzerendgerät (204, 305) zu senden.

15. Randknoten nach Anspruch 14, **dadurch gekennzeichnet, dass** der Randknoten wenigstens eine Randknoten-Aufrüstvorrichtung (203, 304) umfasst, die konfiguriert ist, um beim Empfang der durch das Benutzerendgerät (204, 305) in Übereinstimmung mit der Vorrichtungsaufrüstadresse des Randknotens gesendeten Aufrüstanforderung gespeicherte Informationen zum Aufrüsten der STB an das Benutzerendgerät (204, 305) zu senden.

16. Randknoten nach Anspruch 15, **dadurch gekennzeichnet, dass** der Randknoten eine Randknoten-Lastausgleichsvorrichtung (303) umfasst, die konfiguriert ist, um die Lastbedingung und/oder die Betriebsbedingung jeder Randknoten-Aufrüstvorrichtung (304) zu gewinnen, die Vorrichtungsaufrüstadresse einer Randknoten-Aufrüstvorrichtung (304), die in dem Randknoten eingesetzt wird, in Übereinstimmung mit der Lastbedingung und/oder der Betriebsbedingung jeder Randknoten-Aufrüstvorrichtung (304) auszuwählen und die ausgewählte Randknoten-Aufrüstvorrichtung (304) zu benachrichtigen, um die STB-Aufrüstinformationen an das Benutzerendgerät (305) zu senden.

17. Benutzerendgerät (204, 305) mit einer Set-Top-Box (STB), das konfiguriert ist, um eine Anforderung von STB-Aufrüstinformationen an ein zentrales Aufrüstmanagementsystem zu senden, **dadurch gekennzeichnet, dass** das Benutzerendgerät (204, 305) konfiguriert ist, um
eine Vorrichtungsaufrüstadresse für einen Randknoten von dem zentralen Aufrüstmanagementsystem zu empfangen;
die STB-Aufrüstanforderung an die Vorrichtungsaufrüstadresse zu senden und
die STB-Aufrüstinformationen von dem Randknoten zu empfangen.

18. System zum Aufrüsten einer verteilten Set-Top-Box (STB), **dadurch gekennzeichnet, dass** es eine Zentralknoten-Aufrüstmanagementvorrichtung (201, 301) nach Anspruch 12 und wenigstens einen Randknoten nach Anspruch 14 umfasst.

19. System nach Anspruch 18, **dadurch gekennzeichnet, dass** jeder Randknoten wenigstens eine Randknoten-Aufrüstvorrichtung (203, 304) umfasst, die konfiguriert ist, um beim Empfang der durch das Benutzerendgerät in Übereinstimmung mit der Vorrichtungsaufrüstadresse des Randknotens gesendeten Aufrüstanforderung gespeicherte Informationen zum Aufrüsten der STB an das Benutzerendgerät zu senden.

20. System nach Anspruch 19, **dadurch gekennzeichnet, dass** die Zentralknoten-Aufrüstmanagementvorrichtung (201, 301) ferner eine Zentralknoten-Lastausgleichsvorrichtung (202, 302) umfasst, die konfiguriert ist, um eine Signalisierungswechselwirkung zwischen der Zentralknoten-Aufrüstmanagementvorrichtung (201, 301) und einem externen Netz zu managen und die Lastbedingung und/oder die Betriebsbedingung jeder Randknoten-Aufrüstvorrichtung (203, 304) zu gewinnen, und dass die Zentralknoten-Aufrüstmanagementvorrichtung (201, 301) konfiguriert ist, um die Vorrichtungsaufrüstadresse einer Randknoten-Aufrüstvorrichtung (203, 304), die in dem Randknoten eingesetzt wird, in Übereinstimmung mit der Lastbedingung und/oder der Betriebsbedingung jeder Randknoten-Aufrüstvorrichtung (203, 304) auszuwählen.

21. System nach Anspruch 19, **dadurch gekennzeichnet, dass** jeder Randknoten ferner eine Randknoten-Lastausgleichsvorrichtung (303) umfasst, die konfiguriert ist, um die Lastbedingung und/oder die Betriebsbedingung jeder Randknoten-Aufrüstvorrichtung (304) zu gewinnen, die Vorrichtungsaufrüstadresse einer Randknoten-Aufrüstvorrichtung (304), die in dem Randknoten eingesetzt wird, in Übereinstimmung mit der Lastbedingung und/oder der Betriebsbedingung jeder Randknoten-Aufrüstvorrichtung (304) auszuwählen und die ausgewählte Randknoten-Aufrüstvorrichtung (304) zu benachrichtigen, um die STB-Aufrüstinformationen an das Benutzerendgerät (305) zu senden.

22. System nach Anspruch 21, **dadurch gekennzeichnet, dass** die Zentralknoten-Aufrüstmanagementvorrichtung (301) konfiguriert ist, um die Vorrichtungsaufrüstadresse der Randknoten-Lastausgleichsvorrichtung (303) als die Vorrichtungsaufrüstadresse des Randknotens auszuwählen und beim Empfang einer durch das Benutzerendgerät (305) gesendeten STB-Aufrüstanforderung die Vorrichtungsaufrüstadresse der Randknoten-Lastausgleichsvorrichtung (303) an das Benutzerendgerät (305) zu senden.

23. Computer-Programmprodukt, **dadurch gekennzeichnet, dass** es Computer-Programmcode umfasst, der, wenn er durch eine Computereinheit ausgeführt wird, die Computereinheit veranlasst, die Schritte eines Benutzerendgerätes nach einem der Ansprüche 2, 6, 9 und 11 auszuführen.

24. Computerlesbares Medium, **dadurch kennzeichnet, dass** der Computer-Programmcode nach Anspruch 23 in dem computerlesbaren Medium gespeichert ist.

## Revendications

1. Procédé de mise à niveau d'un Boîtier Adaptateur (STB, Set Top Box) réparti à partir d'un dispositif de gestion de mise à niveau de noeud central, **caractérisé par** les étapes consistant à :
recevoir (s401) une demande de mise à niveau de STB envoyée par un terminal utilisateur ;
sélectionner (s402) une adresse de mise à niveau de dispositif d'un noeud de bord ; et
envoyer (s403) l'adresse de mise à niveau de dispositif du noeud de bord au terminal utilisateur.

2. Procédé selon la revendication 1, **caractérisé en ce que** le terminal utilisateur obtient des informations de mise à niveau en provenance du noeud de bord par l'intermédiaire de l'adresse de mise à niveau de dispositif (s604, s605).

3. Procédé selon la revendication 1 ou 2, **caractérisé par** l'obtention (s600) d'au moins l'un d'un état de charge et d'un état de fonctionnement de chaque dispositif de mise à niveau de noeud de bord déployé dans le noeud de bord, avant de recevoir la demande de mise à niveau de STB.

4. Procédé selon la revendication 3, **caractérisé en ce que** la sélection d'une adresse de mise à niveau de dispositif d'un noeud de bord comprend :
la sélection (s602) de l'adresse de mise à niveau de dispositif conformément à au moins l'un d'une information de position du terminal utilisateur, de l'état de charge, et
de l'état de fonctionnement de chaque dispositif de mise à niveau de noeud de bord déployé dans le noeud de bord.

5. Procédé selon l'une quelconque des revendications précédentes, **caractérisé en ce que** l'adresse de mise à niveau de dispositif du noeud de bord comprend une adresse de mise à niveau de dispositif d'un dispositif de mise à niveau de noeud de bord déployé dans le noeud de bord (s402).

6. Procédé selon la revendication 5, **caractérisé en ce que** le terminal utilisateur obtient des informations de mise à niveau en provenance du dispositif de mise à niveau de noeud de bord par l'intermédiaire de l'adresse de mise à niveau de dispositif (s402).

7. Procédé selon la revendication 1 ou 2, **caractérisé en ce que** l'adresse de mise à niveau de dispositif du noeud de bord comprend une adresse de mise à niveau de dispositif
d'un dispositif d'équilibrage de charge de noeud de bord déployé dans le noeud de bord (s802).

8. Procédé selon la revendication 7, **caractérisé par**
la réception (s804), par le dispositif d'équilibrage de charge de noeud de bord, de la demande de mise à niveau de STB envoyée par le terminal utilisateur ;
la sélection (s805), par le dispositif d'équilibrage de charge de noeud de bord, d'un dispositif de mise à niveau de noeud de bord des dispositifs de mise à niveau de noeud de bord déployés dans le noeud de bord ;
la notification (s805), par le dispositif d'équilibrage de charge de noeud de bord, au dispositif de mise à niveau de noeud de bord sélectionné de l'envoi d'informations de mise à niveau de STB au terminal utilisateur.

9. Procédé selon la revendication 8, **caractérisé en ce que** le terminal utilisateur obtient les informations de mise à niveau en provenance du dispositif de mise à niveau de noeud de bord sélectionné (s806).

10. Procédé selon la revendication 8, **caractérisé par** l'obtention (s805), par le dispositif d'équilibrage de charge de noeud de bord, d'au moins l'un d'un état de charge et d'un état de fonctionnement de chaque dispositif de mise à niveau de noeud de bord déployé dans le noeud de bord, avant de recevoir la demande de mise à niveau de STB.

11. Procédé de mise à niveau d'un terminal utilisateur avec de nouvelles informations de mise à niveau de Boîtier Adaptateur (STB), dans lequel une demande de mise à niveau de STB est envoyée, par le terminal utilisateur, à un dispositif de gestion de mise à niveau central, **caractérisé par**
la réception (s603, s803), par le terminal utilisateur, d'une adresse de mise à niveau de dispositif destinée à un noeud de bord en provenance du système de gestion de mise à niveau central ;
l'envoi (s604, s804, s805), par le terminal utilisateur, de la demande de mise à niveau de STB à l'adresse de mise à niveau de dispositif ; et
la réception (s806), par le terminal utilisateur, des informations de mise à niveau de STB en provenance du noeud de bord.

12. Dispositif de gestion de mise à niveau de noeud central (201, 301), comprenant une première unité (2013, 3013) configurée pour recevoir une demande de mise à niveau de Boîtier Adaptateur (STB) en provenance d'un terminal utilisateur (204, 305), **caractérisé en ce qu'**il comprend en outre :
une deuxième unité (2013, 3013), configurée pour sélectionner une adresse de mise à niveau de dispositif d'un noeud de bord ; et
une troisième unité (2013, 3013), configurée pour envoyer l'adresse de mise à niveau de dispositif du noeud de bord au terminal utilisateur.

13. Dispositif de gestion de mise à niveau de noeud central selon la revendication 12, **caractérisé en ce que** la deuxième unité (2013, 3013) est configurée pour sélectionner l'adresse de mise à niveau de dispositif d'un dispositif de mise à niveau de noeud de bord (203, 304) conformément à au moins l'un d'une information de position du terminal utilisateur (204, 305), de l'état de charge, et de l'état de fonctionnement de chaque dispositif de mise à niveau de noeud de bord (203, 304) déployé dans le noeud de bord.

14. Noeud de bord dans un système destiné à mettre à niveau un Boîtier Adaptateur (STB) réparti, **caractérisé en ce que** le noeud de bord est configuré pour recevoir une demande de mise à niveau de STB en provenance d'un terminal utilisateur (204, 305) à destination d'une adresse de mise à niveau de dispositif du noeud de bord, et pour envoyer les informations d'utilisateur de STB au terminal utilisateur (204, 305).

15. Noeud de bord selon la revendication 14, **caractérisé en ce que** le noeud de bord comprend au moins un dispositif de mise à niveau de noeud de bord (203, 304) qui est configuré pour envoyer des informations stockées pour mettre à niveau le STB au terminal utilisateur (204, 305) lors de la réception de la demande de mise à niveau envoyée par le terminal utilisateur (204, 305) conformément à l'adresse de mise à niveau de dispositif du noeud de bord.

16. Noeud de bord selon la revendication 15, **caractérisé en ce que** le noeud de bord comprend un dispositif d'équilibrage de charge de noeud de bord (303) qui est configuré pour obtenir au moins l'un de l'état de charge et de l'état de fonctionnement de chaque dispositif de mise à niveau de noeud de bord (304), pour sélectionner l'adresse de mise à niveau de dispositif d'un dispositif de mise à niveau de noeud de bord (304) déployé dans le noeud de bord conformément à au moins l'un de l'état de charge et de l'état de fonctionnement de chaque dispositif de mise à niveau de noeud de bord (304), et pour notifier le dispositif de mise à niveau de noeud de bord sélectionné (304) qu'il est nécessaire d'envoyer les informations de mise à niveau de STB au terminal utilisateur (305).

17. Terminal utilisateur (204, 305) comportant un Boîtier Adaptateur (STB) configuré pour envoyer une demande d'informations de mise à niveau de STB à un système de gestion de mise à niveau central, **caractérisé en ce que** le terminal utilisateur (204, 305) est configuré
pour recevoir une adresse de mise à niveau de dispositif destinée à un noeud de bord en provenance du système de gestion de mise à niveau central ;
pour envoyer la demande de mise à niveau de STB à l'adresse de mise à niveau de dispositif ; et
pour recevoir les informations de mise à niveau de STB en provenance du noeud de bord.

18. Système destiné à la mise à niveau d'un Boîtier Adaptateur (STB) réparti, **caractérisé en ce qu'**il comprend : un dispositif de gestion de mise à niveau de noeud central (201, 301) selon la revendication 12 et au moins un noeud de bord selon la revendication 14.

19. Système selon la revendication 18, **caractérisé en ce que** chaque noeud de bord comprend au moins un dispositif de mise à niveau de noeud de bord (203, 304) qui est configuré pour envoyer des informations stockées pour mettre à niveau le STB au terminal utilisateur lors de la réception de la demande de mise à niveau envoyée par le terminal utilisateur conformément à l'adresse de mise à niveau de dispositif du noeud de bord.

20. Système selon la revendication 19, **caractérisé en ce que** le dispositif de gestion de mise à niveau de noeud central (201, 301) comprend en outre un dispositif d'équilibrage de charge de noeud central (202, 302) qui est configuré pour gérer une interaction de signalisation entre le dispositif de gestion de mise à niveau de noeud central (201, 301) et un réseau externe, et pour obtenir au moins l'un de l'état de charge et de l'état de fonctionnement de chaque dispositif de mise à niveau de noeud de bord (203, 304), et **en ce que** le dispositif de gestion de mise à niveau de noeud central (201, 301) est configuré pour sélectionner l'adresse de mise à niveau de dispositif d'un dispositif de mise à niveau de noeud de bord (203, 304) déployé dans le noeud de bord conformément à au moins l'un de l'état de charge et de l'état de fonctionnement de chaque dispositif de mise à niveau de noeud de bord (203, 304).

21. Système selon la revendication 19, **caractérisé en ce que** chaque noeud de bord comprend en outre un dispositif d'équilibrage de charge de noeud de bord (303) qui est configuré pour obtenir au moins l'un de l'état de charge et de l'état de fonctionnement de chaque dispositif de mise à niveau de noeud de bord (304), pour sélectionner
l'adresse de mise à niveau de dispositif d'un dispositif de mise à niveau de noeud de bord (304) déployé dans le noeud de bord conformément à au moins l'un de l'état de charge et de l'état de fonctionnement de chaque dispositif de mise à niveau de noeud de bord (304), et pour notifier au dispositif de mise à niveau de noeud de bord sélectionné (304) qu'il est nécessaire d'envoyer les informations de mise à niveau de STB au terminal utilisateur (305).

22. Système selon la revendication 21, **caractérisé en ce que** le dispositif de gestion de mise à niveau de noeud central (301) est configuré pour sélectionner l'adresse de mise à niveau de dispositif du dispositif d'équilibrage de charge de noeud de bord (303) en tant qu'adresse de mise à niveau de dispositif du noeud de bord, et pour envoyer l'adresse de mise à niveau de dispositif du dispositif d'équilibrage de charge de noeud de bord (303) au terminal utilisateur (305) lors de la réception d'une demande de mise à niveau de STB envoyée par le terminal utilisateur (305).

23. Produit de programme informatique, **caractérisé en ce qu'**il comprend un code de programme informatique qui, lorsqu'il est exécuté par une unité informatique, amènera l'unité informatique à exécuter les étapes d'un terminal utilisateur selon l'une quelconque des revendications 2, 6, 9 et 11.

24. Support lisible par ordinateur, **caractérisé en ce que** le code de programme informatique selon la revendication 23 est stocké sur le support lisible par ordinateur.
